# EUROPEAN PATENT APPLICATION

(11) **EP 1 375 057 A1**
(43) Date of publication of application: **02.01.2004**
(21) Application number: 02425391.6
(22) Date of filing: 17.06.2002
(51) Int. Cl.: B23Q 3/00, B23Q 7/14, B23Q 1/00

(54) **Machine tool with pallets for clamping workpieces**

(71) Applicant: Bacci Paolino Di Bacci Di Agostino, 56021 Cascina, Pisa (IT)
(72) Inventor: Ruggieri, Alberto, 56025 Pontedera, Pisa (IT)
(74) Representative: Mannucci, Michele

(57) **Abstract**

The machine tool comprises:
- at least one operating head (9) with at least one working tool (11) moving on a plurality of numerically controlled axes;
- at least one guide (15) extending from a working area to a workpiece (P1, P2) loading and unloading area;
- a workpiece slide (21) mobile on said guide (15);
- at least two pallets (41, 43) for arranging the workpieces;
- pallet (41, 43) clamping members on said slide (21);
- in the loading and unloading area, at least one loading device (23) for placing the pallets (41, 43), where workpieces to be machined are arranged, on the slide (21) and for removing pallets, where machined workpieces are arranged, from said slide, said loading device having at least two engaging means for two pallets.
- on said slide, a first coupling (91) between a source of vacuum (P, L) and said pallets;
- on said device, a second coupling (120) between a source of vacuum and said pallets;
- suction workpiece clamping means on said pallets, connectable to said first and said second coupling.

## Description

The invention relates to a machine tool or station for machining workpieces, specifically but not exclusively wooden elements, such as components for chairs and other items for furniture.

More particularly, the invention relates to a machine tool of the type comprising at least one operating unit with a head carrying one or more tools with one or more numerically controlled axes and a mobile slide on a guide from a workpiece loading and unloading area and a machining area and vice versa.

A machine tool or station of this type is described in EP-A-1055485. In this known machine, specifically designed for machining elongated elements, such as legs and other structural parts of chairs or the like, the workpieces are loaded by specific magazines arranged by the sides of the machine and fastened to a pair of beams with variable distance between centres.

The object of the invention is to provide a machine tool or station which speeds up the workpiece loading and unloading operations and which ensures reliable workpiece control during the loading and unloading operations as well as during machining.

Essentially, the machine according to the invention comprises the following in combination:
- at least one operating head with at least one working tool moving on a plurality of numerically controlled axes;
- at least one guide extending from a working area to a workpiece loading and unloading area;
- a mobile workpiece slide on said guide;
- at least two pallets for arranging the workpieces;
- pallet clamping members on said slide;
- at least one device for placing the pallets where workpieces to be machined are arranged on the slide in the loading and unloading area and for removing the pallets where machined workpieces are arranged from said slide;
- a first coupling between a source of vacuum and said pallets on said slide;
- a second coupling between a source of vacuum and said pallets on said device;
- suction workpiece clamping means on said pallets connectable to said first and said second coupling.

According to this arrangement, the workpiece to be machined is clamped on the respective pallets by the effect of suction when the pallet is in a loading position supported by the device which positions and removes the pallets on and from the slide. While the pallet with the workpiece to be machined is in one of the at least two seats that the device presents for housing the pallets, a second pallet (on which the workpiece machined during the previous cycle is arranged) is taken from the slide and withheld in the second seat of said device. In a later phase, the device removes the second pallet with the machined workpiece from the slide and positions the first pallet with the new workpiece to be machined on it.

The operating head can be carried by a vertical upright and capable of moving along the upright. The upright may be fixed, as described in detail with reference with an embodiment below. In this case, the slide moves along two numerically controlled axes, reciprocally orthogonal. A first axis is parallel and one is orthogonal to the guide. The slide will be carried by a carriage in this case, the carriage and the slide being capable of reciprocally orthogonal movement. More in detail, the carriage can move on the guide and extend orthogonally thereto to house a system of additional guides along which the slide moves with respect to the carriage.

Alternatively, the movement in the orthogonal direction of the guide which extends from the working area to the loading and unloading area may be assured by the upright. In this case, the slide slides directly along the guide without the interposition of an intermediate carriage.

Alternatively, the operating head may be carried by a gantry and may move along the gantry crossbeam, in which case the guide extends through the gantry.

The suction means on the slide and on the pallet placing and removing device withhold the pallets carrying the workpieces (both the workpieces to be machined and the machined workpieces) efficiently and safely in all instants of the pallet replacement cycle. All pallet collection and replacement movements can thus be carried out in rapid succession and at high speed, whereby cutting working cycle times. The movement of the slide carrying the pallets on the guide extending from the working position to the loading and unloading position determines the connection of pallets carried by said slide to the coupling on the device, while the relative movement between the device collecting and placing pallets from and on the slide connects the pallets to the coupling on the slide when the pallet is arranged on the slide. The movements are controlled and co-ordinated in such as way that when a workpiece is positioned on a pallet, the suction means for clamping the workpiece on the pallet are constantly pneumatically connected to a source of vacuum.

In practice, to obtain a connection between the two couplings, each pallet can comprise a body with at least one conduit connectable to the first coupling and to the second coupling, which is in turn connected to workpiece suction clamping means. Furthermore, single-acting valves are arranged in said conduit and are used to generate the vacuum by connecting to either one or the other of said first and second suction means.

The slide can present a table pivoting on a vertical axis on which the members for clamping the pallets on the slide are arranged. In this way, the pallets can be pivoted, for example, by 180° from a collection position to a working position. Furthermore, the pivoting table may be turned on the vertical axis by a stepper motor or other so that this movement is numerically controlled to offer an additional numerically controlled axis for machining the workpiece.

Each pallet can present means for adjusting and clamping one or more beams defining the resting surface of the workpiece or a template on which the workpiece is fixed. This arrangement can be used to change the geometry of the resting plane according to the shape and dimension of the workpiece. Other alternative or additional means can be used to clamp the workpieces or the templates.

Furthermore, according to a perfected embodiment of the invention, means for clamping the workpiece on the pallet operated by pressurised fluid, specifically compressed air, may also be provided. Also in this case, circuits which are similar to those for connecting to the source of vacuum may be used to ensure the connection to the compressed air line also when the pallet is transferred from the loading and unloading device to the slide and vice versa.

Additional advantageous features and embodiments of the machine according to the invention are recited in the annexed claims.

The invention will be better understood following the description and the enclosed drawing, which shows a non-limitative embodiment of the invention. More particularly, in the drawing:

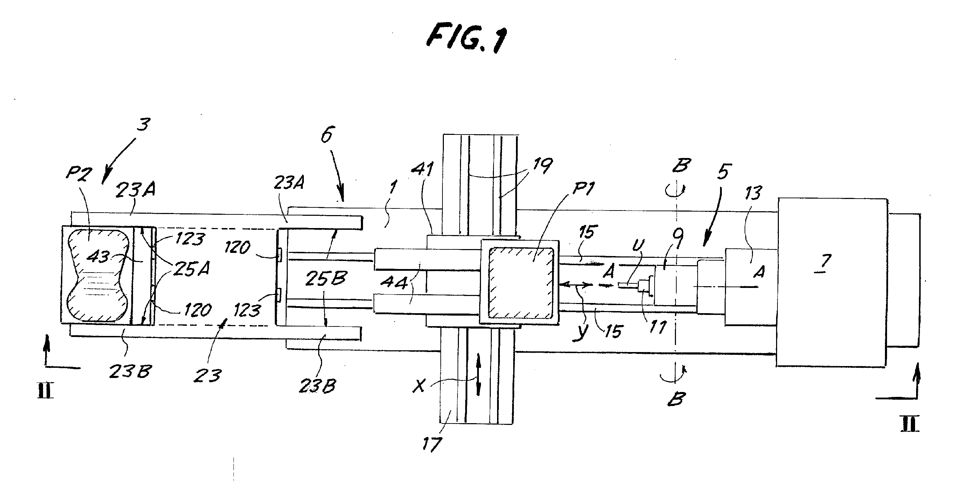

- figure 1 is a plan view of the machine according to the invention,
- figures from 2 to 4 are lateral views according to ll-ll in figure 1 in three different operational positions,
- figure 5 is a cross-sectional view according to V-V in figure 8 of the slide with a pallet clamped onto it,
- figure 6 is a local cross-sectional view according to VI-VI in figure 5,
- figure 7 is a local cross-sectional view according to VII-VII in figure 8,
- figure 8 is a partly broken away-plan view of a pallet withheld by the device for collecting and positioning the pallets on the slide with parts removed, and
- figure 9 is a pneumatic circuit diagram.

With initial reference to figures from 1 to 4, the machine comprises a base 1 arranged between a workpiece loading and unloading area, generically indicated by reference numeral 3, and a working area, generically indicated by reference numeral 5. An upright 7 carrying an operating head 9 with a multiple chuck 11 supported by an arm 13 is positioned in correspondence with an end of the base 1. References U schematically indicate the tools carried by the multiple chuck. The operating head moves on a numerically controlled vertical axis Z. The arm 13 pivots on an axis A-A (the movement is numerically controlled) and the multiple chuck 11 (which is a cross-shaped chuck with four tools in this example) moves on a second numerically controlled pivoting axis B-B.

A guide 15 on which a carriage 17 slides is arranged along the base 1. The movement along the guide 15 is numerically controlled. Reference Y indicates the corresponding numeric control axis. An additional guide 19, developing at an angle of 90° with respect to the guide 15, on which a slide 21 slides, is arranged on the carriage 17. The movement of the slide 21 along the guide 19 is numerically controlled and the respective numerically controlled axis is indicated by reference X. Mechanical members, which will be described in greater detail below, are arranged on the slide 21, on which slide the workpieces are clamped. The carriage 17 moves along the guide 15 between the working position 5 and a position 6 where the pallets are positioned and removed onto and from the slide 21, the workpieces being positioned and clamped on said pallets.

Consequently, the tools carried by the multiple chuck 11 present, with respect to the workpiece, the possibility of moving along three numerically controlled axes X, Y, Z and two numerically controlled pivoting axes A-A, B-B. The movement along Y is also used to transfer the workpieces from the loading and unloading area 3 to the working area 5.

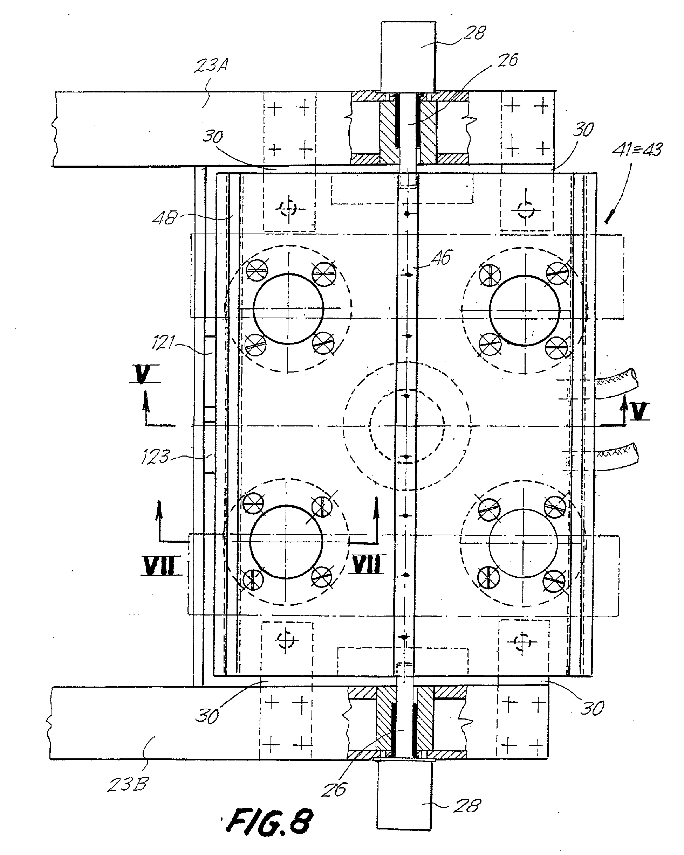

A device, generically indicated with reference numeral 23, is located on the opposite end of the base 1 as to the upright 7. This device is used to position the pallets on the slide 21 and collect the pallets from the slide, the workpieces being clamped on the pallets. The device 23 presents a pair of crossbeams 23A, 23B which essentially define two counterpoised forks 25A, 25B forming seats for engaging the pallets, equipped with clamping punches 26 controlled by appropriate actuators 28, e.g. pneumatic cylinders (figure 8). The pallets are supported in the seats by four lower rests 30. It is understood that the pallets can be engaged to device 30 in any other way, e.g. using a higher number of clamping punches and a lower number of rests 30, or even without rests. Alternatively to seats formed by forks 25A, 25B can implement other means for coupling the pallets to the device, e.g. a system of jaws or grippers which hold an edge of the pallets.

Device 23 is vertically mobile according to the double arrow f23 and either pivot or turn on a vertical axis C-C. Reference numeral 27 schematically indicates an electrical motor which transmits rotation movement through a belt 29 to a threaded bar 31 which in turn is integral with the vertically mobile device 23. The threaded bar 31 engages a worm screw 33 which is integral with an upright 35 along which the device 23 can move in the direction f23. Reference numeral 37 indicates a motor which controls rotation on the axis C-C of the device 23.

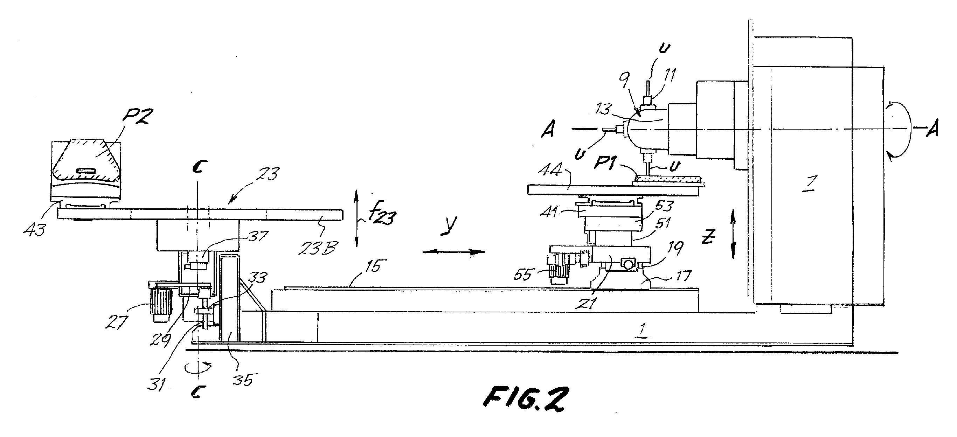

With reference to figures from 2 to 4, initially (figure 2) a workpiece P1 is mounted on a pallet 41 carried by the slide 21 is in the working position 5 while a second pallet 43 is on device 23 with a workpiece P2 (intended to be machined during the next cycle) arranged and clamped onto it. The clamping means will be described below. In the example shown, the surfaces for clamping the workpieces have different shapes on the two pallets. Also workpieces P1 and P2 are different, but this is not binding for the invention.

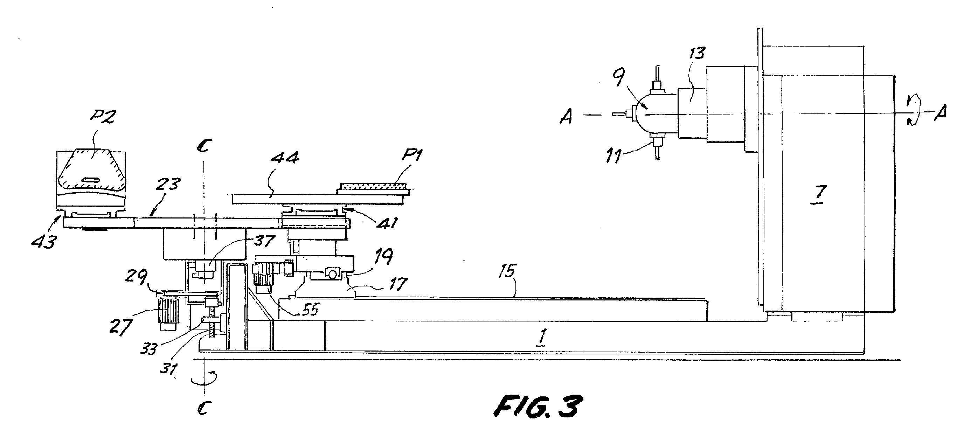

Figure 3 shows a following phase in which the pallet 21 has been transferred by the moving carriage 17 along the guide 15 which is integral with the base 1, from the working position 5 to the loading and unloading position 3. The crossbeams 23A, 23B have a development which also extends over the base 1 and under the height of the pallet (pallet 41 in figure 3) which is on the slide 21 when the device 23 is in its lowest position. The following upwards movement of the device 23 causes the pallet 41 to raise from the slide 21. The pallet is thus engaged in the seat 25A defined by the crossbeams 23A, 23B.

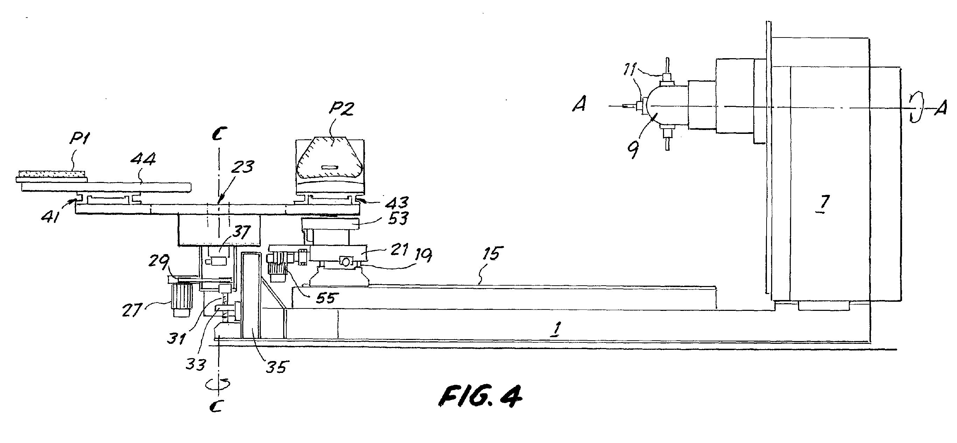

The following 180° rotation of the device 23 on the axis C-C and the lowering of the device deposit the pallet 43 holding the workpiece P2 on the slide 21 (figure 4). At this point, the slide 21 can be transferred to the working position 5 by moving the carriage along the guides 15. At the same time, the machined workpiece can be released and removed from the pallet 41 and a replaced by a new workpiece to be machined.

As shown in the sequence from figure 2 to figure 4, the workpieces P1 and P2 are reciprocally different but the possibility of working identical workpieces in sequence is not excluded.

Each of the two pallets presents a workpiece resting and clamping surface implementing a suction system and possibly one or more clamping members operated by compressed air. In the example shown, one of the two pallets comprises a pair of beams 44 which are parallel to the guide 15 and whose distance between centres can be adjusted orthogonally with respect to the direction of the guide 15 along a rail 46. Alternatively, the beams 44 can be directed at an angle of 90° with respect to the guide 15. The beams 44 are secured in the required position by means of screws whose heads are inserted and fastened in channels 48 in the shape of a reversed T or undercut. The upper surface of the beams 44 are equipped with suction holes on which the workpieces P1, P2 rest to be machined, either directly or by interposed templates. Suction through the holes is obtained by means of a vacuum distribution system which is described in detail below. The workpiece resting and clamping surface can also be made using different means from the two beams described above, e.g. by means of a single table or in another way as long as suction holes are arranged on the workpiece resting surface which are closed by the workpiece or by a template on which the workpiece is clamped.

The length of the beams 44 is considerably longer than that of the base of the respective pallet, thanks to the limited stress which the tools exert on the workpieces, usually made of wood. This allows the use of pallets 41 limited in size and consequently means that device 23 can be compact in size.

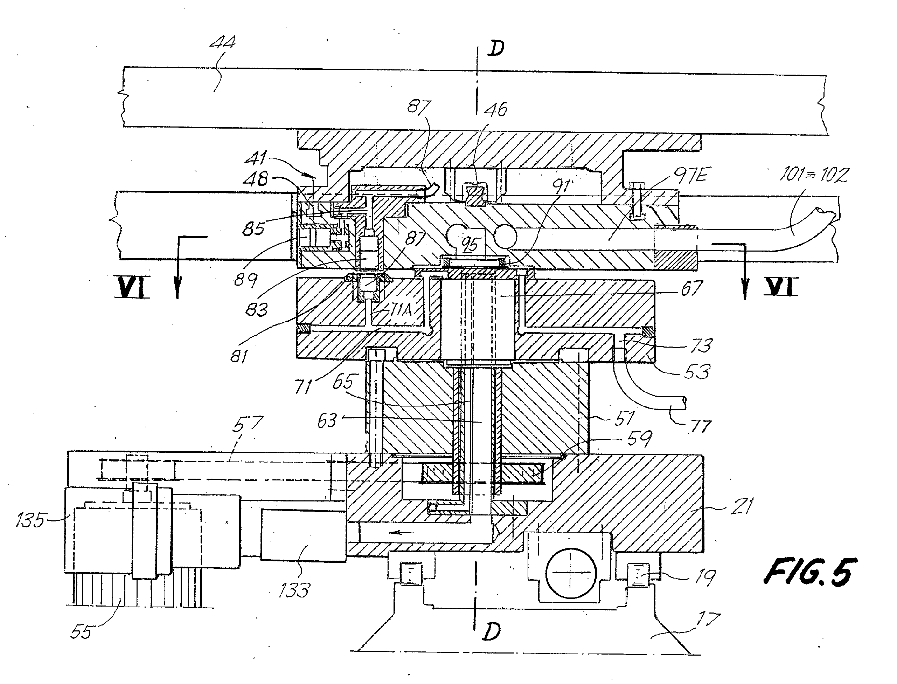

Figure 5 shows a cross-sectional view on a vertical plane of the slide 21 and the members which it carries. It presents a support 51 which supports a pivoting table 53 which can pivot on a vertical axis D-D. Rotation is provided by a motor 55 through a belt 57 and a pulley 59 fitted on a hollow shaft 61. A suction conduit 63 and a plurality of pressurised air conduits are developed through the hollow shaft 61, one of which is visible in the figure and indicated with reference numeral 65, which are connected to the rotary distributor, generically indicated with reference numeral 67. The vacuum and the pressurised air are distributed to the pallet 41 or 43 which is fastened to the pivoting table by means of appropriate conduits which are described below and made in the pivoting table 53.

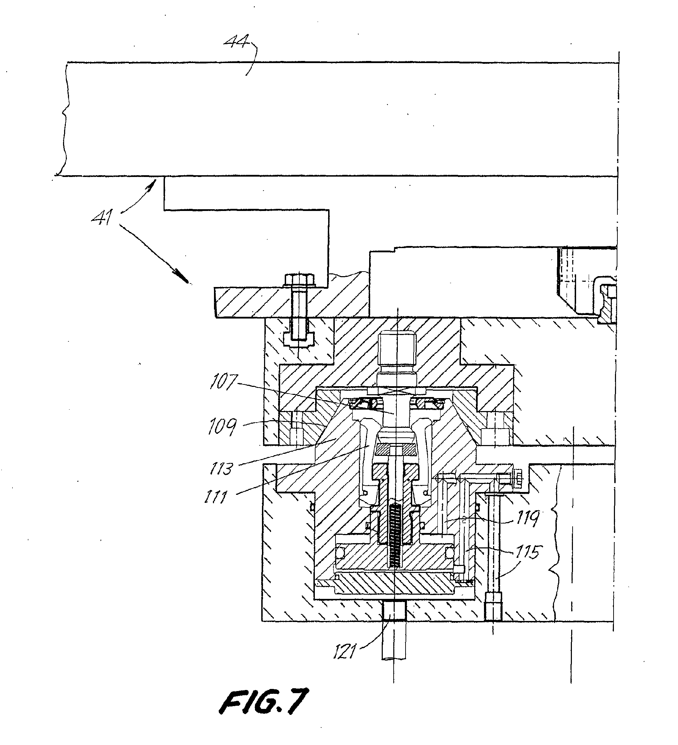

Three conduits are made in the pivoting table 53, only one of which is shown in figure 5 and indicated by reference numeral 73. One end of the conduit is connected to the rotary distributor 67 and the other end is connected to flexible hoses, one of which is visible in figure 5 and indicated by reference numeral 79. The three flexible hoses feed the pressurised air to the pallet clamping members 41 or 43 on the pivoting table 53, which will be described in detail below with reference to figure 7. A branch 71A of the conduit 71 ends with a suction cap or seal 81 which is located in correspondence with a check valve, or other suitable on-off member, 83 to close a conduit 85 made in the pallet 41 (or 43). The suction cap or seal 81 may be integral with the pallet instead of the pivoting table.

The two pallets are essentially equivalent as concerns vacuum and compressed air distribution and consequently reference will be made to one only in the description that follows.

A flexible hose 87 which feeds the actuators (not shown) of the workpiece clamping members (also not shown, of the type known per se) on the pallet 41 is connected to the conduit 85. The check valve 83 closes outwards, i.e. prevents the passage of pressurised air from the conduit 85.

A second check valve or other suitable on-off member is arranged on a branch of the conduit 85, indicated with reference numeral 89 and oriented similarly as the check valve 83. In this way, the conduit 85 and the tube 87 can be connected to a source of compressed air, alternatively either via the check valve 83 or via the check valve 89 or other on-off member. The source of compressed air may be the same, e.g. a common compressed air line from one compressor, or two independent compressed air sources can be used.

When the pallet is on the pivoting table 53, the compressed air is fed, as shown in figure 5, via the check valve 83 while the compressed air is fed via the valve 89 when the pallet is on the device 23.

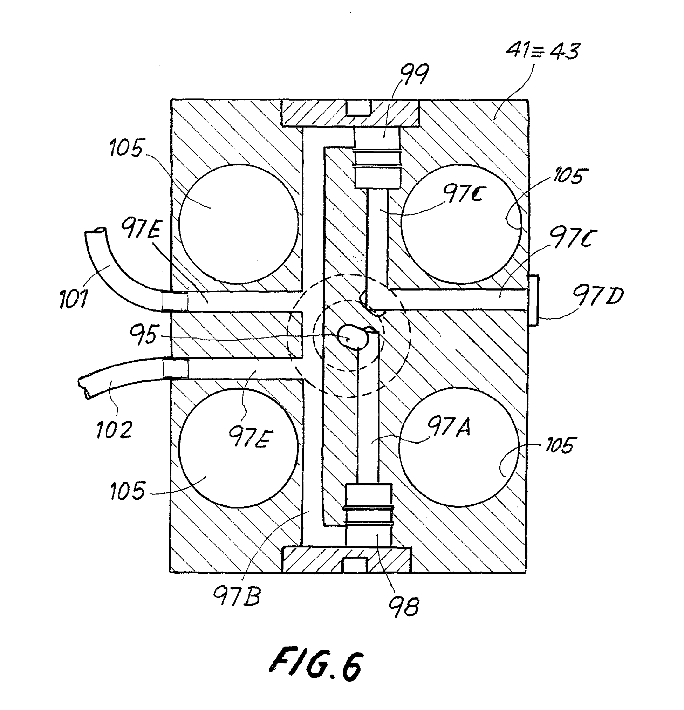

The pallet 41 on the pivoting table 53 presents a seal or suction cap 91 surrounding the inlet 95 of a suction conduit made in the pallet 41 (or 43), illustrated in detail in the cross-sectional view in figure 6, in line with the suction conduit 63. The conduit comprises a first section 97A connected to a second section 97B, a check valve 98 being arranged between the sections 97A and 97B. The conduit section 97B is connected via an additional check valve 99 or other on-off member to a third section 97C ending at 97D with a attachment 120 to a suction conduit connected to a source of vacuum and arranged on the device 23. Two sections 97E are connected to section 97B. The two sections 97E are in turn connected to flexible hoses 101 and 102, whose opposite ends are connected to suction holes (not shown) made in a way which is known per se on the resting surface of the workpiece on the pallet.

With this arrangement, when the pallet is on the pivoting table 53, as shown in figure 5, the suction cap 91 and the inlet 95 create a vacuum in the conduits 97A, 97B, 97E through the suction conduit 63. The two check valves 98 and 99 are arranged so that the vacuum can reach the conduit section 97B but not the conduit section 97C. Conversely, when the pallet is on the device 23, the attachment 97D is connected to a suction line which is carried by the device 23. Through this attachment, the vacuum is propagated via the valve 99 to the conduit section 97B and consequently to the sections 97E. In this way, vacuum is created in the flexible hoses 101 and 102 both when the pallet is on a pivoting table 53 and when the pallet is on the device 23. In the first case, suction is applied via the suction conduit 63, the inlet 95, the valve 98, the conduit section 97B and the conduit section 97E. In the second case, suction is applied via the attachment 97D, the valve 99 and again the conduit sections 97B and 97E. A single source of vacuum may be used, e.g. a single conduit leading from a vacuum pump or two separate sources of vacuum may be employed, e.g. two pumps, one for the slide and one for the pallet loading and unloading device 23.

Section 6 shows four circular section compartments, generically indicated with reference numeral 105, in which the tapered surfaces mate with the pallet clamping members on the pivoting tale 53 carried by the slide 21. The clamping members are shown in the cross-sectional view in figure 7. These are not described in detail being known per se. In brief, a tang 107 and a tapered surface 109 are arranged inside each compartment 105. The tang 107 presents a collar which is engaged by grippers 111 housed in the rotary table 53 and pneumatically controlled, surrounded by a tapered surface 113 which complements the tapered surface 109. Pressurised air pressure conduits 115, 119 and 121, fed by the flexible hose 77 (and the other two flexible hoses, not shown, connected to the rotary distributor 67), open and close the grippers 111 and send compressed air for cleaning the clamping members by removing possible chips and other machining residues from the members.

Two connections, indicated with reference numerals 120 and 123 respectively, are provided in correspondence with each of the two seats 25A, 25B on the device 23 connected to a suction line (which in turn is connected to a source of vacuum) and to a pressurised air line (which is connected to a compressor). These connections correspond to the connection 97D and the check valve 89 for holding vacuum or pressure in the vacuum and compressed air feeding tubes leading to the workpiece clamping members on the pallet, respectively.

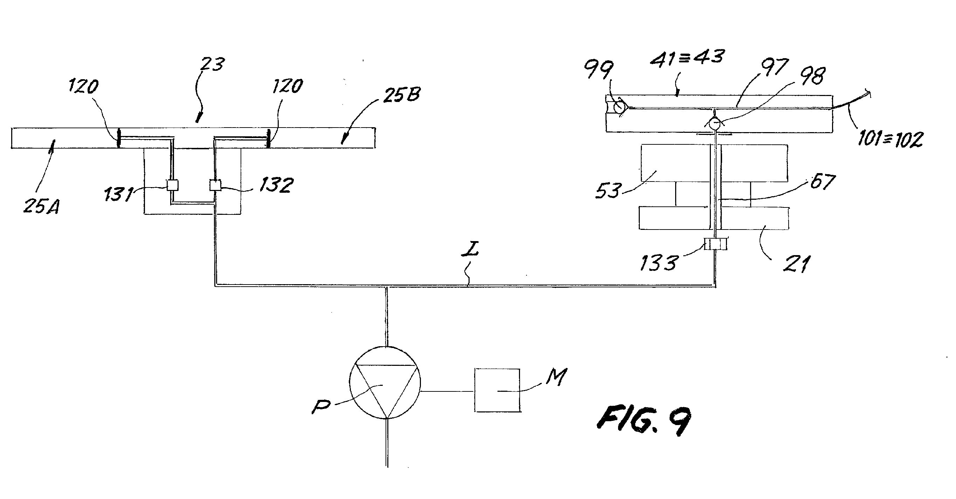

Figure 9 shows a simplified pneumatic diagram of the vacuum circuit on the pallet, the slide 21 and pivoting table 53 and on the device 23. Reference P indicates the pump and reference M indicates the respective motor. The suction line is generally indicated with reference L. It is connected to two connections 120 of the device 23, in correspondence with the two seats 25A and 25B, as well as the slide 21, and from here to the rotary distributor. Reference numerals 98 and 99 again indicate the check valves associated to the pallet 41 or 43 and reference numeral 97 generally indicates the whole of the suction conduit sections made in the pallet which join the valves 98, 99 and flexible hoses 101, 102.

The pneumatic diagram in figure 9 shows that the conduit 97 is kept connected to the source of vacuum P in all the positions of the respective pallet. If the pallet is on the slide, vacuum is held in the conduit 97 via the valve 98 and the rotary distributor 67. If the pallet is on the device 23, vacuum is held via connection 123 and valve 99. Since when the pallet is transferred from the slide 21 to the device 23 there is a moment in which the valve 98 and the valve 99 are both connected to the vacuum line L, the suction needed to withhold the workpiece is constantly ensured in the workpiece suction clamping means.

Reference numerals 131 and 132 indicate three-way valves which cut off the suction to the connections 120 of the two seats 25A and 25B. Reference numeral 133 indicates a three-way valve which cuts off suction to the conduit 63 when said suction is not required. Figure 5 shows the valve 133 with the respective actuator 135. Suction is cut off when the machined workpiece must be unloaded from the pallet which is in seat 25A or 25B most distant from the working area or when the pallet on which the workpiece to be machined is arranged must be transferred from the other one of said seats to the slide 21.

An equivalent pneumatic diagram includes the components described above for the compressed air supply. Also in this case, thanks to the check valves 83 and 89 (which are oriented in the opposite direction with respect to the vacuum circuit) the supply of compressed air is guaranteed to the pallet regardless of its position. In general, the machine may include the suction system only or the suction system combined with a compressed air system.

To remove the machined workpiece from the pallet on the device 23 and replace it with a new workpiece to be machined, it is sufficient to operate the valves on the vacuum line and the compressed air line leading to the connections 120 and 123 associated to the respective seat 25A or 25B.

The rotary table 53 and consequently the rotary distributor 67 can be omitted in a simplified version of the machine. In this case, the pallet 41 or 43 is blocked directly on the slide 21 or on a bed made upon it.

It is clear that the drawing only shows a practical embodiment of the invention, which may vary in shapes and arrangements without departing anyway from the scope of the concept on the basis of the invention. The only purpose of the possible presence of reference numerals in the claims is to facilitate the reading thereof, reference being made to the preceding description and the enclosed drawings without limiting the scope of protection of the claims.

## Claims

1. Machine tool comprising:
- at least one operating head (9) with at least one working tool (11) moving on a plurality of numerically controlled axes;
- at least one guide (15) extending from a working area to a workpiece (P1, P2) loading and unloading area;
- a workpiece slide (21) mobile on said guide (15);
- at least two pallets (41, 43) for arranging the workpieces;
- pallet (41, 43) clamping members on said slide (21);
- in the loading and unloading area, at least one loading device (23) for placing pallets (41, 43), where said workpieces to be machined are arranged, on the slide (21) and for removing the pallets, where the machined workpieces are arranged, from said slide; said loading device being provided with at least two engaging means for two pallets;
- on said slide, a first coupling (91) between a source of vacuum (P, L) and said pallets
- on said device a second coupling (120) between a source of vacuum and said pallets;
- suction workpiece clamping means on said pallets, connectable to said first and said second coupling.

2. Machine tool according to claim 1, **characterised in that** each of said pallets comprises a body with at least one conduit (97) connectable to said first coupling and to said second coupling and in turn connected with said suction workpiece clamping means; shutting means (98, 99) being arranged in said conduit.

3. Machine tool according to claim 2, **characterised in that** said shutting means are check valves (98, 99).

4. Machine tool according to claim 2 or 3, in which said conduit presents a first portion (95, 97A) connectable to said first coupling (91) and a second portion (97C) connectable to said second coupling (120), which are connected to a common section (97B, 97E) in turn connected to said suction clamping means, said shutting means (98, 99) being arranged between said central section and each of said first and second portion.

5. Machine tool according to one or more of the preceding claims, in which the movement of said slide along the guide extending from the working position to the loading and unloading position determines the connection of the pallet carried by said slide to said second coupling.

6. Machine tool according to one or more of the preceding claims, in which said device for positioning said pallets on the slide moves on an axis which is essentially vertical, the movement along said essentially vertical axis causing the connection of the pallet to said first coupling on the slide.

7. Machine tool according to claims 5 and 6, in which the connection movements of the pallets to the first and the second coupling are controlled so that when a workpiece is arranged on a pallet, said suction clamping means are constantly pneumatically connected to a source of vacuum.

8. Machine tool according to one or more of the previous claims, in which said loading device is provided with a rotary movement on a vertical axis to move the pallets from a pallet placement and retrieval position on said slide and a workpiece loading and unloading position.

9. Machine tool according to one or more of the previous claims, in which each of said pallets comprises an adjustment guide (46) and fastening means for positioning and securing one or more workpiece supporting beams (44) in an adjustable position, said beams presenting suction holes on a resting surface of said workpieces.

10. Machine tool according to one or more of the previous claims, in which said slide presents a table (53) pivoting on a vertical axis, said pallets being fastened on said rotating table and in which the slide is associated to a rotary distributor (67) for pneumatically connecting the pallet to the slide.

11. Machine tool according to one or more of the previous claims, in which:
- gripping means operated by pressurised fluid are associated to each of said pallets for mechanically securing the workpieces on the pallets;
- a third coupling (81) is provided on said slide between a pressurised fluid source and said pallets;
- a fourth coupling (123) is arranged on said device between a pressurised fluid source and said pallets.

12. Machine tool according to claims 2 and 11, in which each of said pallets comprises at least one additional conduit (85) connectable to said third coupling and said fourth coupling, which in turn is connected to said workpiece gripping means; shutting means (89) being provided in said additional conduit (85).

13. Machine tool according to claim 12, in which said shutting means comprise check valves.

14. Machine tool according to claim 12 or 13, in which said additional conduit presents a first position connectable to said third coupling and a second portion connectable to said fourth coupling, which are connected to a common section, in turn connected to said gripping means, shutting means being provided between said central section and each of said first and second portions.

15. Machine tool according to one or more of the previous claims, in which the movement of said slide along the guide extending from the working position to the loading and unloading position determines the connection of the pallet carried by said slide to said fourth coupling.

16. Machine tool according at least to claims 6 and 11, in which the movement along said essentially vertical axis of the device determines the connection of the pallet to said third coupling on the slide.

17. Machine tool according to one or more of the claims above, in which said slide carries tapered members for centring and clamping the pallet on the slide, said members being pneumatically operated.

18. Machine tool according to claims 10 and 17, in which said tapered members are carried by the pivoting table and in which said rotating distributor presents a conduit for supplying pressurised air for locking and unlocking the pallets with respect to the pivoting table.

19. Machine tool according to one or more of the previous claims, in which said slide moves along a numerically controlled axis which is horizontal and orthogonal to said guide.
